# EUROPÄISCHE PATENTSCHRIFT

(11) **EP 3 377 772 B1**
(45) Veröffentlichungstag und Bekanntmachung des Hinweises auf die Patenterteilung: **05.01.2022**
(21) Anmeldenummer: 16795364.5
(22) Anmeldetag: 15.11.2016
(51) Int. Cl.: F04D 19/04, F03G 3/08, H02K 7/02

(54) **VORRICHTUNG ZUM SPEICHERN KINETISCHER ENERGIE**
DEVICE FOR STORING KINETIC ENERGY
DISPOSITIF D'ACCUMULATION D'ÉNERGIE CINÉTIQUE

(30) Priorität: 19.11.2015 DE 202015007985 U
(43) Veröffentlichungstag der Anmeldung: 26.09.2018
(73) Patentinhaber: Leybold GmbH, 50968 Köln (DE)
(72) Erfinder: ENGLÄNDER, Heinrich, 52441 Linnich (DE); SCHNEIDERS, Robert, 53819 Neunkirchen-Seelscheid (DE)
(74) Vertreter: dompatent von Kreisler Selting Werner - Partnerschaft von Patent- und Rechtsanwälten mbB
(86) Internationale Anmeldenummer: PCT/EP2016/077765
(87) Internationale Veröffentlichungsnummer: WO 2017/085076

(56) Entgegenhaltungen:
- EP-A1- 3 106 662
- WO-A1-2016/032839
- DE-A1-102012 110 691
- US-A- 5 462 402

## Beschreibung

Die Erfindung betrifft eine Vorrichtung zum Speichern kinetischer Energie.

Insbesondere aufgrund des wachsenden Anteils an regenerativen Energiequellen, bestehen starke Schwankungen im Stromversorgungsnetz, so dass eine kontinuierliche Stromversorgung gegebenenfalls nicht gewährleistet ist. Zur Kompensierung derartiger Versorgungsschwankungen ist die Installation von Energiespeichern erforderlich. Zur Speicherung von Energie ist es bekannt, Schwungräder vorzusehen. Derartige Schwungräder sind auf einer Welle angeordnet und mit einer Motor-Generator-Einheit verbunden. Mit Hilfe der Motor-Generator-Einheit kann einerseits das Schwungrad angetrieben und andererseits das sich drehende Schwungrad für die Energierückgewinnung genutzt werden. Die Effizienz eines Energiespeichers hängt stark vom Eigenbedarf des Systems an Energie ab.

Beispielsweise aus DE 10 2012 110 691 ist es bekannt, ein Schwungrad in einem Gehäuse anzuordnen und in dem Gehäuse ein Vakuum zu erzeugen. Durch die Erzeugung des Vakuums erhöht sich die Effektivität der Vorrichtung zum Speichern kinetischer Energie. In DE 10 2012 110 691 ist vorgeschlagen, Teile des Schwungrads unmittelbar als Vakuumpumpe auszugestalten. Hierzu sind an Oberflächen des Schwungrads rillenförmige Vertiefungen vorgesehen, so dass das Schwungrad zylinderseitig ähnlich eines Rotors einer Holweckstufe bzw. stirnseitig als Siegbahnstufe funktioniert. Mit einer derartigen Anordnung ist es nicht möglich ein tiefes Vakuum bzw. einen sehr niedrigen Druck innerhalb eines Gehäuses, in dem das Schwungrad angeordnet ist zu erzeugen.

Durch eine Verringerung des Drucks könnte die Effektivität der Vorrichtung jedoch verbessert werden.

Des Weiteren weist die in DE 10 2012 110 691 beschriebene Vorrichtung zum Speichern kinetischer Energie den Nachteil auf, dass die aufgrund der hohen Drehzahl des Schwungrades auftretenden Fliehkräfte und damit die Dehnungen des Rotationskörpers sehr hoch sind. Diese sind drehzahlabhängig und wirken insofern auch auf die Spaltverhältnisse des Schwungrades an den Holweckstufen, an dem die Vertiefungen der Fördergewinde angeordnet sind. Es ist daher erforderlich, relativ große Dichtspalte an den Kanalstegen vorzusehen, um Beschädigungen durch Rotor-Statorkontakt zu vermeiden. Hierdurch verringert sich der Wirkungsgrad der Pumpe.

Desweiteren ist es bei DE 10 2012 110 691 nachteilig in vielen Bereichen der Flächen des Rotors Kanäle vorzusehen. Bei diesem Pumpmechanismus handelt es sich um Reibungsvakuumpumpen. Insofern wird Reibung in einem Bereich erzeugt, in dem Reibung zur Verbesserung des Wirkungsgrads eigentlich vermieden werden müsste.

In US 5,462,402A ist eine weitere Vorrichtung zum Speichern kinetischer Energie in Anlehnung an den Obersatz des Anspruchs 1 offenbart.

Aufgabe der Erfindung ist es, eine Vorrichtung zum Speichern kinematischer Energie mit verbessertem Wirkungsgrad zu schaffen.

Die Lösung der Aufgabe erfolgt erfindungsgemäß durch die Merkmale des Anspruchs 1.

Eine Vorrichtung zum Speichern kinematischer Energie weist ein Schwungrad auf. Das Schwungrad ist in einem Innenraum eines Gehäuses angeordnet, wobei das Gehäuse beispielsweise einen Gehäusekörper und einen Gehäusedeckel aufweist. Mit dem Schwungrad ist eine Welle verbunden. Die Welle ist in dem Gehäuse mittelbar oder unmittelbar gelagert. Besonders bevorzugt ist es, dass die Lagerung mittels magnetischen Lagern erfolgt, da hierdurch der Energiebedarf der Vorrichtung verringert und somit der Wirkungsgrad verbessert werden kann. Des Weiteren weist die Vorrichtung zum Speichern kinetischer Energie eine Motor-Generator-Einheit auf. Diese dient einerseits zum Antreiben des Schwungrads und andererseits zur Energierückgewinnung. Hierbei kann es sich um eine derartige Einheit handeln, dass dasselbe Bauteil sowohl als Motor als auch als Generator dient. Gegebenenfalls kann es hierbei auch um gesonderte Bauteile handeln. In dem Gehäuse ist ferner eine Vakuumpumpe zum Evakuieren des Innenraums angeordnet. Diese Vakuumpumpe übergibt das gepumpte Gas vorzugsweise an eine Vorvakuumpumpe, die dann gegen Atmosphäre verdichtet. Erfindungsgemäß ist es in dieser Energiespeichervorrichtung besonders bevorzugt, eine Vakuumpumpe bestehend aus einem Turboaxialverdichter mit Flügelgeometrien und einem Gasreibungsverdichter vorzugsweise in Form von Holweck-, Gaede- oder Siegbahnstufen vorzusehen, die auf der Welle des Schwungrades angeordnet ist. Dies hat den erfindungsgemäßen Vorteil, dass auf die Bauteile der Vakuumpumpe unabhängig vom Schwungrad geringere Fliehkräfte wirken.

In bevorzugter Weiterbildung der Erfindung ist die Vakuumpumpe als separates Bauteil ausgebildet und auf der Welle angeordnet. Insbesondere sind somit die wesentlichen Bauteile der Pumpe nicht Bestandteile des Schwungrades, so dass es möglich ist, diese Bestandteile der Vakuumpumpe vorzugsweise hinsichtlich ihrer Ausgestaltung, ihrer Anordnung, des verwendeten Materials etc. derart auszugestalten, dass die auf diese wirkenden Fliehkräfte zu verhältnismäßig geringen Verformungen führen, bzw. durch die Verformungen der Pumpenwirkungsgrad möglichst gering beeinflusst wird. Insbesondere ist die Vakuumpumpe in dieser Ausführungsform als separates Bauteil ausgebildet und ferner auf der Welle angeordnet, dies hat den Vorteil, dass die auf die Vakuumpumpe wirkenden Fliehkräfte aufgrund der Anordnung auf der Welle reduziert werden und ferner die Pumpe entsprechend der wirkenden Fliehkräfte verbessert ausgestaltet werden kann.

Bei einer besonders bevorzugten Ausführungsform ist die Vakuumpumpe zumindest teilweise innerhalb einer Außenhülse angeordnet. Die Außenhülse ist hierbei vorzugsweise aus faserverstärktem Kunststoff hergestellt bzw. weist faserverstärkten Kunststoff auf. Dies hat den Vorteil, dass bei geringem Gewicht eine hohe Stabilität erzielt werden kann. Die Außenhülse dient somit dazu, auch bei hohen Fliehkräften die Anordnung der Bauteil der Vakuumpumpe möglichst exakt zu definieren, so dass die Pumpe einen hohen Wirkungsgrad aufweist bzw. der Wirkungsgrad der Fliehkräfte möglichst gering beeinträchtigt wird.

In einer bevorzugten Ausführungsform ist die Vakuumpumpe als Außenläufer ausgebildet. In dieser Ausführungsform ist die Außenhülse mit dem Schwungrad verbunden, bzw. von diesem getragen. Die Förderelemente der Vakuumpumpe wie insbesondere Rotorscheiben sind mit der Außenhülse verbunden. Hierbei können beispielsweise mehrere Rotorscheiben einer Turbomolekularstufe vorgesehen sein, wobei zur Definition des Abstands der Rotorscheiben beispielsweise Ringelemente zwischen den Rotorscheiben angeordnet sind. Entsprechend sind bei dieser Ausführungsform weitere Förderelemente wie Statorscheiben vorgesehen. Die Statorscheiben sind beispielsweise über ein Trägerelement mit dem Gehäuse verbunden, da sich die Statorscheiben nicht drehen. Bei den Statorscheiben kann es sich ebenfalls um einzelne Scheiben handeln, deren Abstand durch zwischen den Statorscheiben angeordnete Ringelemente definiert ist.

In besonders bevorzugter Weiterbildung ist eine Innenhülse vorgesehen, wobei die Vakuumpumpe zumindest teilweise außerhalb der Innenhülse angeordnet ist. Bei einem Außenläufer ist bevorzugt, dass die Innenhülse mittelbar oder unmittelbar mit dem Gehäuse verbunden ist, wobei die Innenhülse sodann die stationären Elemente der Pumpe wie insbesondere die Statorscheiben trägt.

Die Innenhülse kann in bevorzugter Weiterbildung einen Abstand zur Welle aufweisen. In diesem Abstand kann eine weitere Pumpstufe, bei der es sich in besonders bevorzugter Ausführungsform um eine Holweckstufe handelt, angeordnet sein.

Bei einer weiteren bevorzugten Ausführungsform der Erfindung ist die Außenhülse mit dem Gehäuse, insbesondere mit dem Gehäusedeckel verbunden. Mit der Außenhülse können in dieser Ausführungsform die nicht drehenden Elemente der Vakuumpumpe, insbesondere die Statorscheiben verbunden sein. Die drehenden Elemente wie die Rotorscheiben sind in dieser Ausführungsform vorzugsweise mit der Welle verbunden. Hierbei kann eine unmittelbare Verbindung mit der Welle erfolgen. Auch ist es möglich eine Innenhülse vorzusehen, die sodann in bevorzugter Ausführungsform mit der Welle verbunden ist und die Rotorscheiben oder anders ausgebildete Rotorelemente trägt.

Bei einer mehrstufigen Vakuumpumpe kann eine weitere Stufe auch in dieser Ausführungsform beispielsweise zwischen einer in einem Abstand zur Welle angeordneten Innenhülse und somit zwischen der Innenhülse und der Welle vorgesehen sein. Bei dieser weiteren Pumpstufe handelt es sich in bevorzugter Ausführungsform um eine Holweckstufe.

Unabhängig davon, ob die Vakuumpumpe als Außenläufer oder als Innenläufer ausgebildet ist, ist eine zwei- oder mehrstufige Vakuumpumpe vorgesehen. Die erste Stufe ist als Turbomolekularpumpen-Stufe und die zweite Stufe als Holweck- Gaede- oder Siegbahnstufe ausgebildet. Diese zweite Stufe ist unabhängig von der Art der Pumpe in Strömungsrichtung der ersten Stufe nachgeordnet. Die vorgeschaltete Turbomolekularstufe erlaubt eine weitere Druckabsenkung, was für den Wirkungsgrad des Schwungrades von Vorteil ist.

Im Betrieb, das heißt nach einer ersten Evakuierung des Innenraums des Gehäuses und darüber hinaus belasten nur noch geringe Gasmengen diese Pumpenkombination, die in der Fachsprache auch als Wide-Range-Pumpe oder Compoundpumpe bezeichnet wird. Eine Druckerhöhung durch diese geringe Gasmenge erfolgt im Wesentlichen nur aufgrund von Undichtigkeiten. Dies hat zur Folge, dass im Betrieb die Vorpumpe der Compoundpumpe zeitweise abgeschaltet werden kann, was den Wirkungsgrad der Gesamtanlage zum Speichern kinetischer Energie weiter verbessert. In dieser Phase verdichtet die Compoundpumpe gegen die geschlossene Vorvakuumpumpe bis der maximal für die Compoundpumpe zulässige Vorvakuumdruck erreicht wird und damit der hochvakuumseitige Druck wieder ansteigt. In dem Fall muss die Vorvakuumpumpe wieder zugeschaltet werden, um den Vorvakuumdruck wieder abzusenken und das System unter optimalen Bedingungen zu betreiben.

Als Vorvakuumpumpen sind hierbei besonders Drehschieber-, Scroll- oder Schraubenverdichterpumpen geeignet, weil sie einen niedrigeren Vorvakuumdruck erzeugen als die Compoundpumpe benötigt und damit ein zeitweises Abschalten ermöglichen. Bevorzugt ist es hierbei, dass die Vorvakuumpumpe wie oben beschrieben nur betrieben wird, wenn relativ hoher Druck im Innenraum des Gehäuses herrscht.

In besonderes bevorzugter Weiterbildung ist zwischen einem Gehäuseauslass und der Vorvakuumpumpe eine Pufferkammer vorgesehenen. In dieser Pufferkammer kann ein Puffervolumen erzeugt werden, so dass die Compoundpumpe in dieses Puffervolumen hineinpumpen kann bis ihr zulässiger Vorvakuumdruck erreicht ist. Hierdurch lässt sich die Zuschaltphase der Vorvakuumpumpe verkürzen.

Besonders bevorzugt ist es, dass die verwendete Vakuumpumpe wie vorstehend beschrieben weitergebildet ist.

Nachfolgend wird die Erfindung anhand bevorzugter Ausführungsformen unter Bezugnahme auf die Zeichnungen näher erläutert.

Es zeigen:
- Fig. 1: eine schematische Schnittansicht einer bevorzugten Ausführungsform einer Vorrichtung zum Speichern kinetischer Energie,
- Fig. 2: eine vergrößerte schematische Ansicht der im Bereich II in Fig. 1 angeordneten Vakuumpumpe,
- Fig. 3: eine schematische Schnittansicht einer Ausführungsform einer Vorrichtung zum Speichern kinetischer Energie, die nicht zur Erfindung gehört, und
- Fig. 4.: eine vergrößerte schematische Ansicht der im Bereich IV in Fig. 1 angeordneten Vakuumpumpe,

Die schematisch dargestellte Vorrichtung zum Speichern kinetischer Energie weist ein Gehäuse 10 mit einer Gehäusebasis 12 und einem Gehäusedeckel 15 auf. Durch das Gehäuse 10 ist ein Innenraum 14 ausgebildet, der gegenüber der Umgebung abgedichtet und daher evakuierbar ist. Innerhalb des Gehäuses 10 ist eine Welle 16 angeordnet, die ein Schwungrad 18 trägt oder mit dem Schwungrad 18 einstückig ausgebildet ist. Die Welle 16 ist über Lager 20 in dem dargestellten Ausführungsbeispiel in der Gehäusebasis 12 bzw. im Gehäusedeckel 15 gelagert. Bei den Lagern 20 handelt es sich in bevorzugter Ausführungsform um Magnetlager.

Mit Hilfe einer Motor-Generator-Einheit 22 kann einerseits das Schwungrad zu einer Energiespeicherung angetrieben und bei der Nutzung der Einheit 22 als Generator zu einer Energierückgewinnung genutzt werden.

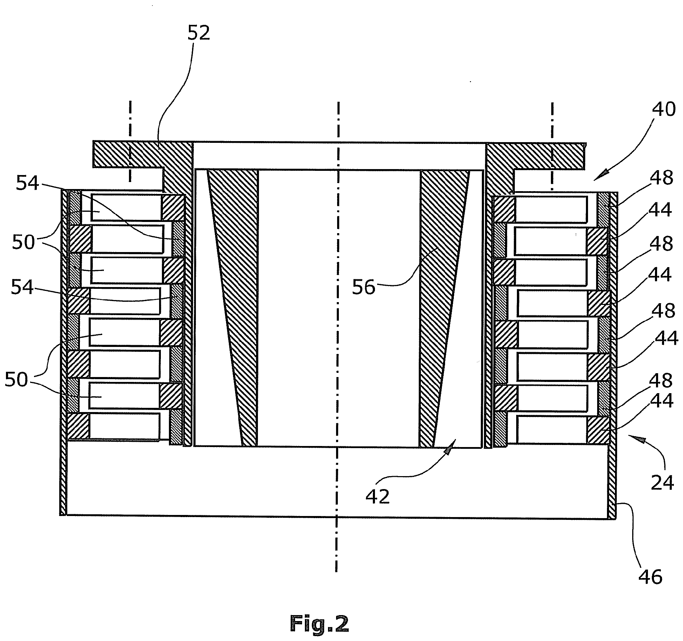

Um den Wirkungsrad der Vorrichtung zum Speichern kinetischer Energie zu verbessern, wird der Innenraum 14 evakuiert. Hierzu ist auf der Welle 16, das heißt in einem inneren, zentralen Bereich des Innenraums 14 eine Vakuumpumpe 24 angeordnet, die zur Verdeutlichung in Fig. 2 vergrößert dargestellt ist. Mit Hilfe der Vakuumpumpe 24 erfolgt ein Fördern von im Innenraum 14 vorhandener Gase in Richtung der Pfeile 26, 28 durch einen Gehäuseauslass 30.

Zur weiteren Verbesserung des Wirkungsgrades ist mit dem Auslass 30 über eine schematisch dargestellte Leitung 32 eine Pufferkammer 34 und mit dieser über eine weitere schematisch dargestellte Leitung 36 eine Vorvakuumpumpe 38 verbunden. Die Vorvakuumpumpe 38 pumpt gegen Atmosphäre.

Insbesondere durch Vorsehen der Vakuumpumpe 24 ist es möglich im Innenraum 44 einen niedrigen Vakuumdruck von insbesondere kleiner als 10⁻⁴mbar zu erzeugen. Das Vorsehen der Vorvakuumpumpe 38 ist erforderlich, da die vorgeschaltete Vakuumpumpe 24 nicht gegen Atmosphäre pumpen kann. Im laufenden Betrieb kann die Vorvakuumpumpe 38 zumeist ausgeschaltet bleiben, solange der für die Vakuumpumpe 24 zulässige Vorvakuumdruck nicht überschritten wird. Dies ist möglich, da in den Innenraum 14 nur geringe Gasmengen beispielsweise durch Undichtigkeiten gelangen.

Durch Zwischenschalten der Pufferkammer 34, in der von der Vorvakuumpumpe 38 ein Vakuum erzeugt wird, kann der Wirkungsgrad weiter verbessert werden, da hierdurch im Betrieb das Zuschalten der Vorvakuumpumpe 38 und damit Energieverbrauch weiter vermieden werden kann.

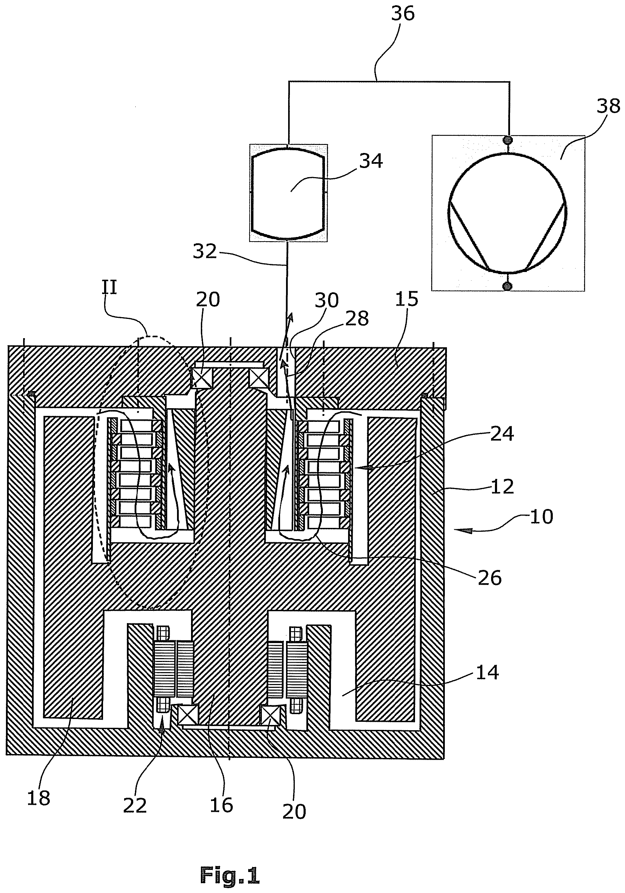

In der in den Fign. 1 und 2 dargestellten Ausführungsform weist die Vakuumpumpe eine Turbomolekular-Stufe 40 sowie eine sich in Strömungsrichtung an diese anschließende Holweckstufe 42 auf. Diese Holweckstufe könnte auch eine wie im Patent DE 10 2012 110 691 beschriebene Siegbahnstufe sein. Bei der Turbomolekular-Stufe 40 handelt es sich im dargestellten Ausführungsbeispiel um einen Außenläufer. Hierzu sind im dargestellten Ausführungsbeispiel Rotorscheiben 44 der Turbomolekularpumpe 40 mit einer Außenhülse 46 verbunden. Zwischen den einzelnen Rotorscheiben sind ringförmige Abstandshalter 48 angeordnet. Die einzelnen Rotorscheiben 44 sind somit in der Hülse 46 fixiert. Die Hülse 46, bei der es sich insbesondere um eine faserverstärkte Hülse handelt, ist fest mit dem Schwungrad 18 (Fig. 1) verbunden. Durch Vorsehen der beispielsweise als zylindrisches CFK-Rohr ausgebildeten Hülse 46 wird die Wirkung der auf die Vakuumpumpe 24 wirkenden Fliehkräfte verringert.

Ferner weist die Turbomolekular-Stufe 40 Statorscheiben 50 auf, die mit einer Innenhülse 52 verbunden sind. Über ringförmige Abstandshalter 54 ist der Abstand der Statorscheiben 50 definiert. Die Innenhülse 52 ist mit dem Gehäuse 10 (Fig. 1) bzw. dem Gehäusedeckel 15 fest verbunden. Die Innenhülse 52 kann kohlefaserverstärkt sein oder als CFK-Rohr ausgebildet sein. Dies ist in diesem Ausführungsbeispiel jedoch nicht unbedingt erforderlich, da die Innenhülse 52 stationär ist und keine sich drehenden Teile hält.

In der in den Fign. 1 und 2 dargestellten bevorzugten Ausführungsform der Erfindung ist der Turbomolekularpumpen-Stufe 40 die Holweckstufe 42 (wahlweise auch Siegbahn- oder Gaedestufe) nachgeordnet. In diesem Ausführungsbeispiel ist die Holweckstufe radial vollständig innerhalb der Turbomolekularpumpen-Stufe 40 angeordnet. Die schematisch dargestellte Holweckstufe 42 ist im dargestellten Ausführungsbeispiel als Außengewinde ausgebildet. Selbstverständlich könnte die Holweckstufe 42 auch mit einem Innengewinde versehen sein. Ein inneres Bauteil 56 der Holweckstufe, das im dargestellten Ausführungsbeispiel vorzugsweise ein Gewinde aufweist, ist fest mit der Welle 16 (Fig. 1) verbunden.

Zum Betreiben der Turbomolekularpumpe werden somit aufgrund der Verbindung mit der Welle 16 bzw. dem Schwungrad 18 das innere Bauteil 56 der Holweckstufe sowie die Rotorscheiben 44 angetrieben.

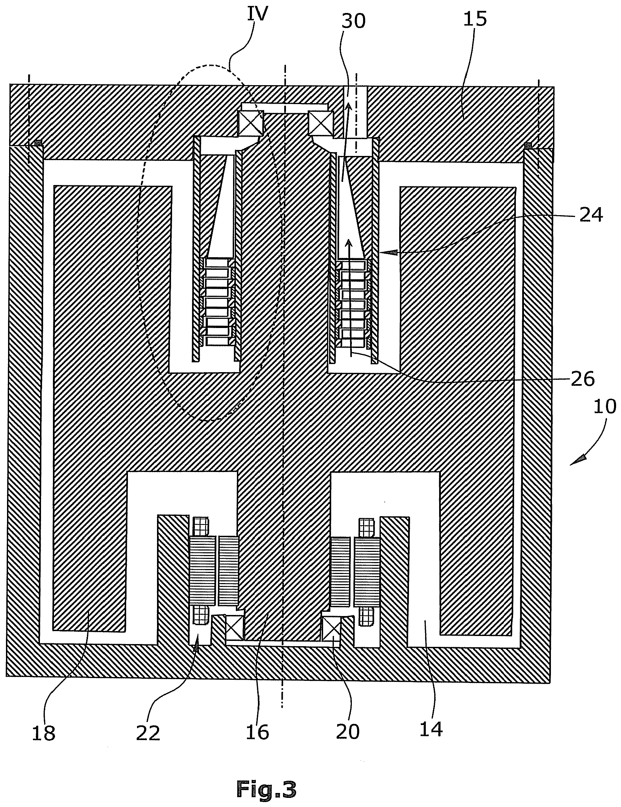

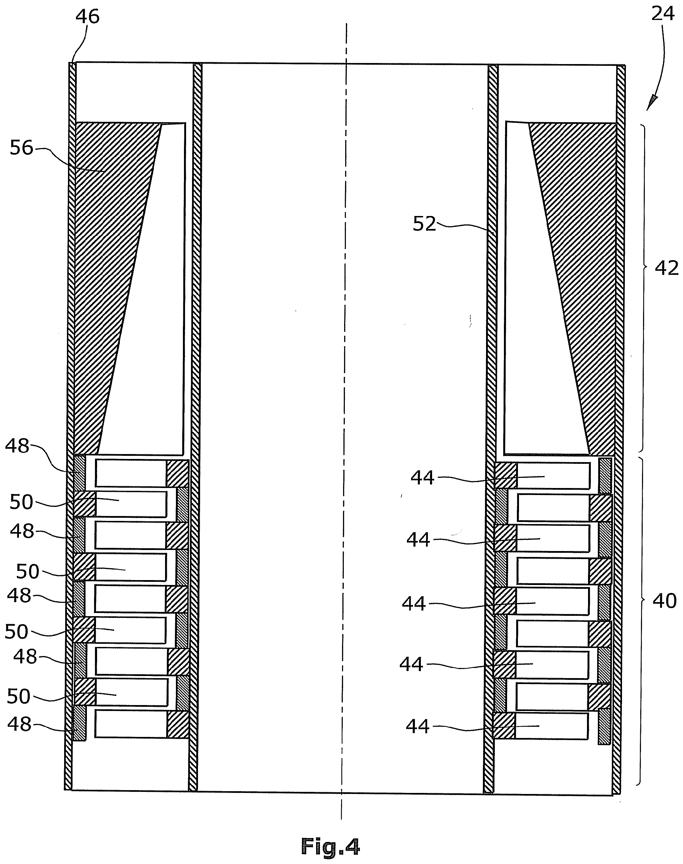

In der in den Fign. 3 und 4 dargestellten Ausführungsform, die nicht zur Erfindung gehört, sind ähnlich oder identische Bauteile mit denselben Bezugszeichen gekennzeichnet. Das Prinzip der Energiespeicherung sowie der Energierückgewinnung mit Hilfe des Schwungrads 18 und der Motor-Generator-Einheit 22 entspricht der anhand Fig. 1 beschriebenen.

Ebenso ist es bevorzugt, dass der Gehäuseauslass 30 mit einer Vorvakuumpumpe 38 und gegebenenfalls auch mit einer Pufferkammer 34 verbunden ist. Die beiden Ausführungsformen unterscheiden sich durch die Ausgestaltung der im Innenraum 14 des Gehäuses 10 angeordneten Vakuumpumpe 24, die wiederum vergrößert in Fig. 4 dargestellt ist.

Die in diesem Ausführungsbeispiel eingesetzte Vakuumpumpe 24 (Fig. 4) weist ebenfalls eine Turbomolekularpumpenstufe 40 auf, der in Strömungsrichtung 26 eine Holweckstufe 42 (wahlweise auch Siegbahn- oder Gaedestufe) nachgeordnet ist. Die Turbomolekularpumpenstufe 42 ist im dargestellten Ausführungsbeispiel als Innenläufer ausgebildet. Dementsprechend sind die Rotorscheiben 44 mit der Innenhülse 52 fest verbunden. Die Innenhülse 52 ist mit der Welle 16 fest verbunden.

Die Statorscheiben 50 sind fest mit der Außenhülse 46 unter Verwendung von Abstandsringen 48 verbunden. Die Außenhülse 46 ist fest mit dem Gehäusedeckel 14 verbunden.

In Strömungsrichtung 26 schließt sich an die Turbomolekularpumpen-Stufe 40 die Holweckstufe 42 an. Diese weist wiederum ein Bauteil 56 auf, das vorzugsweise ein Gewinde aufweist, so dass im dargestellten Ausführungsbeispiel die Holweckstufe 42 wiederum mit einem Innengewinde versehen ist. Ebenso kann die Holweckstufe auch mit einem Außengewinde versehen sein.

In dieser Ausführungsform ist es bevorzugt, dass die Innenhülse 52, die die sich drehenden Bauteile trägt, eine Kohlefaserverstärkung aufweist oder als CFK-Rohr ausgebildet ist.

Anstelle des Vorsehens von Hülsen 52, 46 ist es auch möglich, die Turbomolekularpumpenstufe 40 und/oder die Holweckstufe 42 direkt mit den entsprechenden Bauteilen, d.h. dem Gehäuse 10 bzw. dem Schwungrad 18 oder der Welle 16 zu verbinden. Dies hat einerseits den Vorteil, dass die Bauteilanzahl geringer ist, andererseits entfällt die Reduzierung der Wirkung der Fliehkräfte auf die Vakuumpumpe durch Vorsehen der entsprechenden Hülsen.

Das Vorsehen von Hülsen 52, 46 hat allerdings den Vorteil, dass die Vakuumpumpe vormontiert werden kann und als vormontierte Baugruppe in den Energiespeicher eingebaut werden kann.

## Patentansprüche

1. Vorrichtung zum Speichern kinetischer Energie, mit
einem in einem Innenraum (14) eines Gehäuses (10) angeordneten Schwungrad (18),
einer mit dem Schwungrad (18) verbundenen im Gehäuse (10) gelagerten Welle (16),
einer Motor-Generator-Einheit (22) zum Antreiben des Schwungrads (18) und zur Energierückgewinnung und
einer im Gehäuse (10) vorgesehenen Vakuumpumpe (24) zum Evakuieren des Innenraums (14),
wobei die Vakuumpumpe (24) auf der Welle (16) angeordnet ist,
wobei die Vakuumpumpe (24) eine Turbomolekularpumpen-Stufe (40) aufweist, der ein Gasreibungsverdichter (42) wie eine Holweckstufe, eine Gaedestufe oder eine Siegbahnstufe in Strömungsrichtung (26) nachgeordnet ist,
**dadurch gekennzeichnet, dass**
die Turbomolekularpumpen-Stufe (40) den Gasreibungsverdichter (42) zumindest teilweise umgibt.

2. Vorrichtung nach Anspruch 1, **dadurch gekennzeichnet, dass** die Vakuumpumpe (24) als separates Bauteil auf der Welle (16) angeordnet ist.

3. Vorrichtung nach Anspruch 1, **dadurch gekennzeichnet, dass** es sich bei der Turbomolekularpumpen-Stufe (40) um eine Pumpe mit großem Druckbereich handelt, wobei vorzugsweise eine Verdichtung von 20mbar auf vorzugsweise weniger als 10⁻⁵mbar und insbesondere eine Verdichtung von 10⁻¹mbar auf vorzugsweise weniger als 10⁻⁵mbar erfolgt.

4. Vorrichtung nach Anspruch 1 oder 2, **dadurch gekennzeichnet, dass** die Vakuumpumpe (24) zumindest teilweise innerhalb einer Außenhülse (46) angeordnet ist.

5. Vorrichtung nach Anspruch 4, **dadurch gekennzeichnet, dass** die Außenhülse (46) mit dem Schwungrad (18) oder dem Gehäuse (10) verbunden ist.

6. Vorrichtung nach Anspruch 4 oder 5, **dadurch gekennzeichnet, dass** die Außenhülse (46) Rotorscheiben (44) der Vakuumpumpe (24) oder Statorscheiben (50) der Vakuumpumpe (24) trägt.

7. Vorrichtung nach einem der Ansprüche 1 bis 6, **dadurch gekennzeichnet, dass** die Vakuumpumpe (24) zumindest teilweise außerhalb einer Innenhülse (52) angeordnet ist.

8. Vorrichtung nach Anspruch 7, **dadurch gekennzeichnet, dass** die Innenhülse (52) mit dem Gehäuse (10) oder der Welle (16) verbunden ist.

9. Vorrichtung nach einem der Ansprüche 4 bis 8, **dadurch gekennzeichnet, dass** die Außenhülse (46) und/oder die Innenhülse (52) faserverstärkten Kunststoff aufweist.

10. Vorrichtung nach einem der Ansprüche 7 bis 9, **dadurch gekennzeichnet, dass** die Innenhülse (52) Statorscheiben (50) oder Rotorscheiben (44) der Vakuumpumpe (24) trägt.

11. Vorrichtung nach Anspruch 10, **dadurch gekennzeichnet, dass** die Vakuumpumpe (24) zumindest teilweise zwischen der Außenhülse (46) und der Innenhülse (52) angeordnet ist.

12. Vorrichtung nach einem der Ansprüche 1 bis 11, **dadurch gekennzeichnet, dass** das Schwungrad (18) die Vakuumpumpe (24) zumindest teilweise umgibt.

13. Vorrichtung nach einem der Ansprüche 1 bis 12, **gekennzeichnet durch** eine mit einem Gehäuseauslass (30) verbundene Vorvakuumpumpe (38).

14. Vorrichtung nach Anspruch 13, **dadurch gekennzeichnet, dass** zwischen dem Gehäuseauslass (30) und der Vorvakuumpumpe (38) eine Pufferkammer (34) vorgesehen ist.

## Claims

1. Device for storing kinetic energy, comprising:
a flywheel (18) arranged in an interior (14) of a housing (10),
a shaft (16) connected to the flywheel (18) and supported in the housing (10),
a motor-generator unit (22) for driving the flywheel (18) and for recovering energy, and
a vacuum pump (24) provided in the housing (10) for evacuating the interior (14),
wherein the vacuum pump (24) is arranged on the shaft (16),
wherein the vacuum pump (24) comprises a turbomolecular pump stage (40), a gas friction compressor (42) such as a Holweck stage, a Gaede stage or a Siegbahn stage, being arranged downstream thereof in the flow direction (26),
**characterized in that**
the turbomolecular pump stage (40) surrounds the gas friction compressor (42) at least partly.

2. Device of claim 1, **characterized in that** the vacuum pump (24) is arranged on the shaft (16) as a separate component.

3. Device of claim 1, **characterized in that** the turbomolecular pump stage (40) is a pump with a large pressure range, wherein preferably a compression from 20 mbar to preferably less than 10⁻⁵ mbar and in particular a compression from 10⁻¹ mbar to preferably less than 10⁻⁵ mbar is performed.

4. Device of one of claims 1 or 2, **characterized in that** the vacuum pump (24) is arranged at least partly inside an outer casing (46).

5. Device of claim 4, **characterized in that** the outer casing (46) is connected to the flywheel (18) or the housing (10).

6. Device of one of claims 4 or 5, **characterized in that** the outer casing (46) supports rotor discs (44) of the vacuum pump (24) or stator discs (50) of the vacuum pump (24).

7. Device of one of claims 1 to 6, **characterized in that** the vacuum pump (24) is arranged at least partly outside an inner casing (52).

8. Device of claim 7, **characterized in that** the inner casing (52) is connected to the housing (10) or the shaft (16).

9. Device of one of claims 4 to 8, **characterized in that** the outer casing (46) and/or the inner casing (52) comprise fiber-reinforced plastic material.

10. Device of one of claims 7 to 9, **characterized in that** the inner casing (52) supports stator discs (50) or rotor discs (44) of the vacuum pump (24).

11. Device of claim 10, **characterized in that** the vacuum pump (24) is arranged at least partly between the outer casing (46) and the inner casing (52).

12. Device of one of claims 1 to 11, **characterized in that** the flywheel (18) at least partly surrounds the vacuum pump (24).

13. Device of one of claims 1 to 12, **characterized by** a backing pump (38) connected to a housing outlet (30).

14. Device of claim 13, **characterized in that** a buffer chamber (34) is provided between the housing outlet (30) and the backing pump (38).

## Revendications

1. Dispositif accumulateur d'énergie cinétique, doté
d'un volant d'inertie (18) agencé dans un espace intérieur (14) d'une enceinte (10),
d'un arbre (16) disposé dans l'enceinte (10) et relié au volant d'inertie (18),
d'une unité moteur-génératrice (22) destinée à entraîner le volant d'inertie (18) et à la récupération d'énergie et
d'une pompe à vide (24) prévue dans l'enceinte (10) afin d'évacuer l'espace intérieur (14),
dans lequel la pompe à vide (24) est disposée sur l'arbre (16),
dans lequel la pompe à vide (24) comporte un étage de pompe turbomoléculaire (40), auquel est subordonnée dans la direction d'écoulement (26) une pompe moléculaire (42) comme un étage de Holweck, un étage de Gaede ou un étage de Siegbahn,
**caractérisé en ce que**
l'étage de pompe turbomoléculaire (40) entoure au moins partiellement la pompe moléculaire (42).

2. Dispositif selon la revendication 1, **caractérisé en ce que** la pompe à vide (24) est disposée comme composant séparé sur l'arbre (16).

3. Dispositif selon la revendication 1, **caractérisé en ce que** l'étage de pompe turbomoléculaire (40) est une pompe à large gamme de pression, dans lequel s'effectue de préférence une compression de 20 mbar à de préférence moins de 10⁻⁵ mbar et en particulier une compression de 10⁻¹ mbar à de préférence moins de 10⁻⁵ mbar.

4. Dispositif selon la revendication 1 ou 2, **caractérisé en ce que** la pompe à vide (24) est disposée au moins en partie à l'intérieur d'une enveloppe extérieure (46).

5. Dispositif selon la revendication 4, **caractérisé en ce que** l'enveloppe extérieure (46) est reliée au volant d'inertie (18) ou à l'enceinte (10).

6. Dispositif selon la revendication 4 ou 5, **caractérisé en ce que** l'enveloppe extérieure (46) porte les disques de rotor (44) de la pompe à vide (24) ou les disques de stator (50) de la pompe à vide (24).

7. Dispositif selon l'une des revendications 1 à 6, **caractérisé en ce que** la pompe à vide (24) est disposée au moins en partie à l'extérieur d'une enveloppe intérieure (52).

8. Dispositif selon la revendication 7, **caractérisé en ce que** l'enveloppe intérieure (52) est reliée à l'enceinte (10) ou à l'arbre (16).

9. Dispositif selon l'une des revendications 4 à 8, **caractérisé en ce que** l'enveloppe extérieure (46) et/ou l'enveloppe intérieure (52) comporte du plastique renforcé de fibres.

10. Dispositif selon l'une des revendications 7 à 9, **caractérisé en ce que** l'enveloppe intérieure (52) porte les disques de stator (50) ou les disques de rotor (44) de la pompe à vide (24).

11. Dispositif selon la revendication 10, **caractérisé en ce que** la pompe à vide (24) est disposée au moins en partie entre l'enveloppe extérieure (46) et l'enveloppe intérieure (52).

12. Dispositif selon l'une des revendications 1 à 11, **caractérisé en ce que** le volant d'inertie (18) entoure au moins partiellement la pompe à vide (24).

13. Dispositif selon l'une des revendications 1 à 12, **caractérisé par** une pompe à vide préliminaire (38) reliée à une sortie d'enceinte (30).

14. Dispositif selon la revendication 13, **caractérisé en ce qu'**un compartiment tampon (34) est prévu entre la sortie d'enceinte (30) et la pompe à vide préliminaire (38).
